# EUROPEAN PATENT SPECIFICATION

(11) **EP 2 594 223 B1**
(45) Date of publication and mention of the grant of the patent: **02.03.2016**
(21) Application number: 12192141.5
(22) Date of filing: 09.11.2012
(51) Int. Cl.: A61C 5/00, A61C 13/00

(54) **Dental fibre and method of manufacturing dental fibre**
Dentalfaser und Herstellungsverfahren für Dentalfaser
Fibre dentaire et procédé de fabrication d'une fibre dentaire

(30) Priority: 16.11.2011 PL 39699911
(43) Date of publication of application: 22.05.2013
(73) Proprietor: Kalbarczyk, Grzegorz, 21-003 Ciecierzyn (PL); Grabos, Andrzej, 21-030 Motycz (PL)
(72) Inventor: Kalbarczyk, Grzegorz, 21-003 Ciecierzyn (PL); Grabos, Andrzej, 21-030 Motycz (PL)
(74) Representative: Kalita, Lucjan

(56) References cited:
- GB-A- 2 110 093
- US-A- 4 711 913
- US-A- 5 846 640
- US-A1- 2006 208 393

## Description

The invention relates to a dental fibre.

Fibre reinforced materials and fibres themselves, especially glass fibres, are widely used in many dental indications, in particular, for the splinting, stabilization or reconstruction of teeth.

Dental fibres, available under the following trademarks: "EverStick", "Dentapreg SFM", "Construct", from the Kerr Corporation, are used for splinting of the teeth. They are presented as woven ribbons, which after cutting off a specified length, become suitable material for dental use, including the splinting of mobile teeth due to periodontal disease.

Patent application no. WO 99/52494 discloses a fibre formed as a braid of fine fibres, reinforced with structural components. The core includes a high-quality fibre material, such as tungsten, tantalum, niobium, boron, carbon, or it is a polymer fibre. Wrapped around the core there are thin strands placed on the outside of the casing. The fibre is intended for dental use.

Patent application no. WO 01/50971 discloses a process for forming of a casing used for splinting teeth in periodontitis. A bandage of the casing in the form of ribbon is formed from single thin glass microfibres known under the name "Fiber-Splint". Principal use of the ribbon is based on wrapping teeth after previously applying a cementing substance to the teeth.

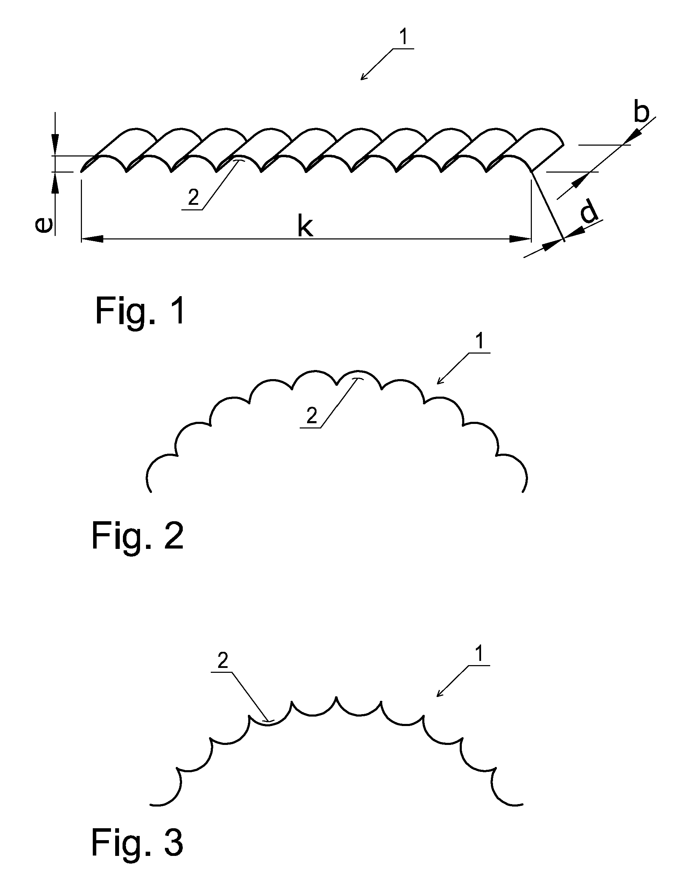

U.S. Patent 5846640 (Vallittu Pekka FI) discloses a dental fibre (prepreg) in the form of a tape made of yarn of thin glass fibres impregnated with a cured organic resin based on methacrylates. Such fibre is subjected to polymerization using a curing light. The tape (prepreg) has, in a side view, a linear or curved shape. The curved, semi-elliptical shape of the tape (prepreg) corresponds to the inner contour of the dental arch. Formed in this way dental fibre is generally used to repair damaged (cracked) dentures. Application of the fibre (prepreg) to repair dentures is disclosed in Example 3 and in Figures 1A - 1C. Pre-formed fibre (propreg) is placed in a groove of the same size and the similar shape, made in the desired area of a repaired denture. The Prepreg, softened by wetting with the monomer of the autopolymerizing, along with that monomer is placed in the groove, and then subjected to polymerization. The result is a repaired denture reinforced with oriented fibres.

From the patent application GB 2 110 093 A is a known additional dental strip as a thin, flat, slightly malleable dental strip with holes in a form of rows of perforations. It is a woven mesh strip, made of metal or plastic resin, glass fibres, nylon. The strip is about 2 to 4 mm wide, with a length sufficient to cover a full dental arch, which is about 7,5 cm and thickness of about 0,8 mm. On one side, the strip has a thin layer of adhesive backing covered with a removable separator such as paper. In the strip, on one side, there are small V-slots enabling the flat surface of the strip to be bent along the inciso-gingival dimension, so that when the strip is binded to the tooth the V-slots allow access by the patient or the dentist to the interproximal spaces for cleaning purposes. Adhesion of the strip to the inner dental arch is obtained by pressing the adhesive side of the strip to teeth along the inner dental arch. Using the extracoronal dental splint in accordance with this invention consists of fitting the length of the strip and properly bending it, using the V-slots, so that it adheres well to the patient's teeth. The applied bonding layer bonds the strip with teeth, and while entering the openings in the strip, it creates a stiff bond after curing.

The purpose of this invention is creating a dental fibre intended especially for splinting and stabilizing teeth, where said fibre will have width and thickness dimensions most suited to the patient's teeth and also will bond well mobile teeth with healthy teeth, which are stable in gums. Moreover, the fibre should be easily formed and cheap. Most importantly though, it should be easily applied by the dentist onto the patient's teeth, and for the procedure to be as short as possible.

The problem is solved by a dental fibre of this invention which is in the form of a strip of spun thin glass fibres, or polyethylene fibres, or polyaramid fibres, or a mixture of such of fibres. These are impregnated with an organic light-cured resin based on methacrylates, with a length corresponding to the length of the upper dental arch in the range from the second molar through premolars, canine, incisors up to the second molar on the opposite side, or the length measured along the curve corresponding to the length of the lower dental arch in the range of the same teeth or a length corresponding to the length of the dental arch in the range of at least three teeth and the entire strip has, in a side view, a linear or arched shape, wherein the strip has a width in the range of 4 to 8 mm. Thickness in the range of 0.05 to 0.8 mm, and a length corresponding to the length of the upper dental arch in the range from the second molar through premolars, canine, incisors up to the second molar on the opposite side, or the length measured along the curve corresponding to the length of the lower dental arch in the range of the same teeth, characterised in that, the strip has semi-elliptical depressions, reflecting outline of the tooth cross-section. The entire strip has, in side view a linear or curved shape.

The depth of the semi-elliptical depressions is in the range of 1 to 3 mm.

The semi-elliptical depressions, at their contacts with each other, form a pointed join, which can be easily pressed interproximally to adjacent teeth. In alternative embodiment a strip between the semi-elliptical depressions, can also be arched or stretched flat thus it can also be more easily pressed interproximally where the teeth are uneven and out of line, making fitting easier in such situations.

The dental fibre in the form of the dental strip with width and thickness dimensions and also shape of semi-elliptical depressions and connectors between these depressions, according to present invention allows for selection of the appropriate strip, as to its width, thickness and the shape of the contact areas between the semi-elliptical depressions. The selection depends on the condition of the patient teeth and progress of the disease. With a considerable lowering of gums the strip with a larger width is selected, while at higher loosening of the teeth, or when there are bigger interdental gaps, the strip should be chosen with a higher thickness and correct shape of the corresponding contact area.

It is preferred when the radius of preformed arch of the strip is greater than the radius of the teeth arch, for which it is intended. When applied to internal surfaces of the dental arch: in the upper and the lower jaw. The shape of the arch corresponds to the contour of these surfaces of the dental arch, the upper or the lower, in cross section, wherein the radius of arch of the strip is lesser than the radius of the teeth arch, for which it is to be used. This shaping makes placing of the fibre easier, clamping the fibre to the surface of the tooth is still required, however the shaped fibre better conforms to the anatomy of the teeth. It is similar in the case of a strip applied to the inner dental arch - both upper and lower; where the radius is smaller than the radius of the arch. In each of this case, while applying the strip, dentist, after applying the strip onto the first splinting tooth and curing, is bending the strip to the next tooth. The length of the strip corresponds to the length of the dental arch, at least, in the range of three teeth. This length is used for a case of only one mobile tooth.

The use of the dental fibres, according to the invention, solves the problem especially well in a case of immobilizing and stabilizing splinting teeth. Semielliptical depressions for teeth hold them well, and sharp endings or arch connectors or flat segments in between those depressions, which cover whole the interproximal spaces, after light curing it creates a stiff surface. Those depressions cover teeth in the front and in the back, and sharp endings or arch connectors or flat segments fill out the interproximal spaces and guarantee stabilization of a mobile tooth in all planes - front, back and sideways. Dental fibre in this shape als resolves the difficulties of splinting and stabilising teeth, greatly simplifying the procedure of splinting. The time taken and procedures for that purpose, are significantly shortened. For the reason that the fibre is appropriate, in length and size of the semi-elliptical depressions for the teeth, also the size and shape of connectors between the depressions can be selected prior to surgery. The patient is in the chair for less time and consequently is less stressed, enabling the clinician to better fit the fibre to the dental arch. Furthermore, the prepared and pre polymerised fibre, is more convenient for obtaining a good fit, and the subsequent steps of splinting of the teeth.

The preferred embodiment of the invention will be described with reference to drawings, in which:
Fig. 1 shows the fibre in the form of a linearly shaped strip in a perspective view,
Fig. 2 shows the arch shaped fibre, designed for fitting on the outer surface of the teeth arch,
Fig. 3 shows the arch shaped fibre, designed for fitting on the inner surface of the teeth arch,

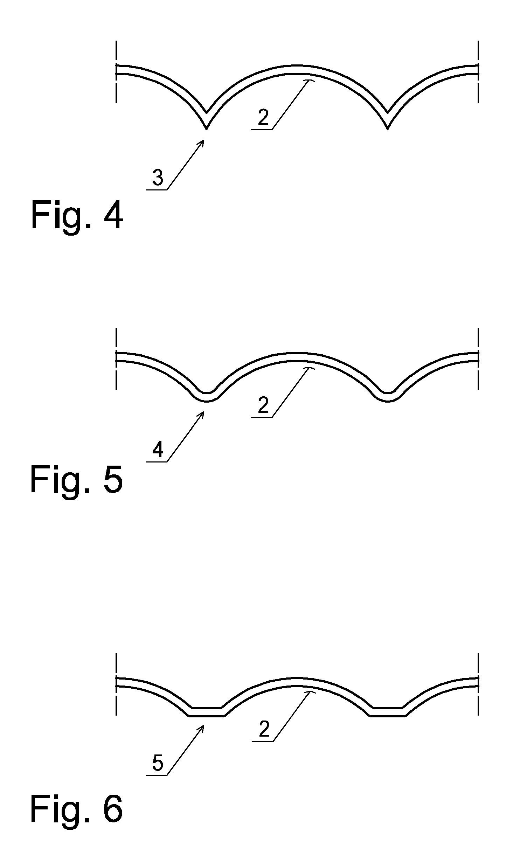

Fig. 4 shows pointed end (3) of the contact of the elliptical depressions (2),
Fig. 5 shows the contact between the elliptical depressions (2), and the arched connector (4)
Fig. 6 shows the contact between the elliptical depressions (2), and the flat stretch (5).

### Description of the preferred embodiment

A dental fibre in the form of strip 1 of spun thin polyaramid fibres, impregnated with the organic light-cured resin based on methacrylates. The strip 1 has width of b = 4 mm, thickness d = 0.15 mm and length of k = 80 mm, which corresponds to the length of the upper dental arch in the range from the second molar through premolars, canine, incisor all the way to the second molar on the opposite side. The strip 1 has semi-elliptical depressions 2, in the shape of half of a tooth in cross section, having recess e= 2 mm.

In other variants the fibre can have length of the strip k lesser than about 80 mm and cover only a few, at least three teeth.

The fibre is made in various versions of forming the contact section of the semi-elliptical depressions 2. Following are located here; a pointed end 3, an arched connector 4 or a flat stretch 5, whereas entire fibre with the strip 1 with the depressions 2 has linear shape showed in Fig. 1. The fibre has an arched shape, showed in Fig. 2 and it is designed for fitting on the outer surface of the teeth arch. Fig. 3 shows the arch shaped fibre, designed for fitting on the inner surface of the teeth arch. In this case, the radius of the arch of the fibre is smaller than the radius of the teeth arch to which the fibre is to be applied.

Made in accordance with the present invention fibres are used in splinting of teeth, according to the following steps:
- selection of a suitable surface for teeth splinting. These may include the upper and lower dental arches on both sides: the labial and palatal surfaces,
- selection of the correct size of the fibre, in width and length,
- depending on the degree mobility of the teeth, clean the teeth,
- prepare the splinting surface by etching and covering with a bonding agent,
- cover the previously prepared tooth surface with a thin layer of composite luting cement,
- hold the formed fibre in the correct position and sequentially exposing the teeth , to the curing light for about 30 seconds for every 5-mm length of fibre,
- cover all the exposed fibre on the stabilised teeth with a thin layer of the composite,
- check the bite and finish.

## Claims

1. Dental fibre in the form of a strip (1) of spun thin glass fibres or polyethylene fibres or polyaramid fibres or combination of such fibres, impregnated with the organic light-cured resin based on methacrylates, wherein the strip (1) has a length (k) corresponding to the length of the upper dental arch in the range from the second molar through the premolars, canine and incisor teeth, to the second molar on the opposite side or the length measured along the curve corresponds to the length of the lower dental arch in the range of the same teeth or the length (k) of the strip (1) corresponds to the length of the dental arch in the range of at least three teeth and the entire strip (1) has, in a side view a linear or curved shape, **characterised in that**, the strip (1) has a width (b) in the range of 4 to 8 mm, a thickness (d) in the range of 0.05 to 0.8 mm and has semi-elliptical depressions (2), reflecting outline of the tooth cross-section.

2. The fibre according to claim 1, **characterized in that**, the depth (e) of the semi-elliptical depressions (2) is in the range of 1 to 3 mm.

3. The fibre according to claim 2, **characterized in that**, the semi-elliptical depressions (2) are in contact with each other to form a pointed end (3).

4. The fibre according to claim 2, **characterized in that**, the strip (1) between the semi-elliptical depressions (2) has an arched connector (4).

5. The fibre according to claim 2, **characterized in that**, the strip (1) between the semi-elliptical depressions (2) has a flat stretch (5).

6. The fibre according to claims 1 to 5, **characterized in that**, the radius of arch of the strip (1) is greater than the radius of the teeth arch, for which it is intended this is the contour of the external surface of the dental arch, the upper or the lower, in the cross section.

7. The fibre according to claims 1 to 5, **characterized in that**, the radius of arch of the strip (1) is lesser than the radius of the teeth arch, for which it is intended this is the contour of the internal surface of the dental arch, the upper or the lower, in the cross section.

## Patentansprüche

1. Dentalfaser in der Form eines Streifens (1), aus dünnen Glas- oder Polyethylen- oder Polyamidfasern oder aus Kompositionen dieser Fasern verflechtet, mit lichthärtendem organischem Harz auf Metacrylanbasis getränkt, wo ein Streifen (1) eine Länge (k), die der Länge des Oberzahnbogens im Bereich vom zweiten Molars, über Prämolaren, den Eckzahn, den Schneidezahn bis zum zweiten Molar auf der gegenüberliegenden Seite entspricht oder eine Länge, die über einen Bogen gemessen wird, dass der Länge des Unterzahnbogens im Bereich der gleichen Zähne entspricht oder eine Länge (k) des Streifens (1) der Länge des Zahnbogens im Bereich von mindestens drei Zähnen entspricht und der gesamte Streifen (1) in seitlichen Ansicht, eine Linien- oder Bogenform aufweist, **dadurch gekennzeichnet, dass** der Streifen (1) die Breite (b) im Bereich von 4 bis 8 mm, die Dicke (d) im Bereich von 0,05 bis 0,8 mm hat und halbeliptische Konkavitäten (2) aufweist, die den Zahnumriss im Querschnitt wiederspiegeln.

2. Dentalfaser nach Anspruch 1, **dadurch gekennzeichnet, dass** die Tiefe (e) der halbelitpischen Konkavitäten (2) im Bereich von 1 bis 3 mm liegt.

3. Dentalfaser nach Anspruch 2, **dadurch gekennzeichnet, dass** halbeliptische Konkavitäten (2) sich berühren und einen scharfen Anschluss bilden (3).

4. Dentalfaser nach Anspruch 2, **dadurch gekennzeichnet, dass** der Streifen (1) zwischen halbeliptischen Konkavitäten (2) einen Bogenverbinder (4) aufweist.

5. Dentalfaser nach Anspruch 2, **dadurch gekennzeichnet, dass** der Streifen (1) zwischen halbeliptischen Konkavitäten (2) einen flachen Abschnitt (5) aufweist.

6. Dentalfaser nach Ansprüchen 1 bis 5, **dadurch gekennzeichnet, dass** der Radius des Streifenbogens (1) größer als der Radius des Zahnbogens, dem dieser bestimmt ist, das heißt der äußere Bogenumriss der Oberfläche des Ober- oder Unterzahnbogens, im Querschnitt, ist.

7. Dentalfaser nach Ansprüchen 1 bis 5, **dadurch gekennzeichnet, dass** der Radius des Streifenbogens (1) kleiner als der Radius des Zahnbogens, dem dieser bestimmt ist, das heißt der innere Bogenumriss der Oberfläche des Ober- oder Unterzahnbogens, im Querschnitt, ist.

## Revendications

1. Fibre dentaire sous forme de ruban (1) tressé en fibres de verre fines ou de polyéthylène ou polyamide ou d'une composition de ces fibres, imprégnées d'une résine photodurcissable, organique, à base de méthacrylates, où le ruban (1) est d'une longueur (k) correspondante à la longueur de l'arcade dentaire supérieure d'une étendue à partir de la deuxième molaire, à travers les prémolaires, la canine, et l'incisive, jusqu'à la deuxième molaire du coté opposé, ou à la longueur mesurée sur l'arc correspondant à la longueur de l'arcade dentaire inférieure d'une étendue comprenante des même dents, ou bien la longueur (k) du ruban (1) correspond à la longueur d'une arcade dentaire d'au moins trois dents, et le ruban entier (1) a en vue de coté, une forme linéaire ou arquée, **caractérisée en ce que**, le ruban (1) est d'une largeur (b) de 4 à 8 mm, d'épaisseur (d) de 0,05 à 0,8 mm et est équipé de concavités semi-elliptiques (2) reproduisantes le contour de la dent en coupe transversale.

2. Fibre selon la revendication 1, **caractérisée en ce que** la profondeur (e) des concavités semi-elliptiques (2) est comprise de 1 à 3 mm.

3. Fibre selon la revendication 2, **caractérisée en ce que** les concavités semi-elliptiques (2) se contactent entre elles, en formant un about pointu (3).

4. Fibre selon la revendication 2, **caractérisée en ce que** le ruban (1) a entre les concavités semi-elliptiques (2) un intermédiaire arqué (4).

5. Fibre selon la revendication 2, **caractérisée en ce que** le ruban (1) a entre les concavités semi-elliptiques (2) un segment plat (5).

6. Fibre selon les revendications de 1 à 5, **caractérisée en ce que** le rayon de l'arc de ruban (1) est supérieur au rayon de l'arc dentaire, auquel il est destiné, c'est-à-dire au contour extérieur, arqué, de la surface de l'arc dentaire, supérieur ou inférieur, en coupe transversale.

7. Fibre selon les revendications de 1 a 5, **caractérisée en ce que** le rayon de l'arc de ruban (1) est inférieur au rayon de l'arc dentaire, auquel il est destiné, c'est-à-dire au contour intérieur arqué de la surface de l'arc dentaire, supérieur ou inférieur, en coupe transversale.
